# EUROPÄISCHE PATENTSCHRIFT

(11) **EP 2 229 990 B1**
(45) Veröffentlichungstag und Bekanntmachung des Hinweises auf die Patenterteilung: **25.06.2014**
(21) Anmeldenummer: 10155121.6
(22) Anmeldetag: 02.03.2010
(51) Int. Cl.: B01D 29/19

(54) **Filterelement**
Filter element
Elément de filtre

(30) Priorität: 18.03.2009 DE 202009003704 U
(43) Veröffentlichungstag der Anmeldung: 22.09.2010
(73) Patentinhaber: Mann + Hummel GmbH, 71638 Ludwigsburg (DE)
(72) Erfinder: Pflüger, Frank, 74343, Sachsenheim (DE); Udachan, Yashwant, 70499 Stuttgart (DE)

(56) Entgegenhaltungen:
- EP-A2- 0 088 148
- DE-A1- 10 233 475
- US-A1- 2004 094 468

## Beschreibung

Die Erfindung betrifft ein Filterelement der im Oberbegriff des Anspruchs 1 angegebenen Gattung.

### Stand der Technik

Die zunehmend verschärften Abgasgrenzwerte können von Nutzfahrzeugen nach dem aktuellen Stand der Technik künftig nur noch mit speziellen Abgasnachbehandlungssystemen eingehalten werden. Als aussichtsreichstes Abgasreinigungssystem gelten derzeit SCR-Katalysatoren ("Selective Catalytic Reduction"), die den Anteil der Stickoxide im Abgas stark verringern.

Dafür wird über eine Einspritzdüse in der Abgasanlage eine im Fahrzeug mitgeführte 32,5-prozentige Harnstoff-Wasser-Lösung zudosiert. Im Katalysator wandelt sich der Harnstoff in Ammoniak um, worauf die im Abgas enthaltenen Stickoxide zu unschädlichem Stickstoff und Wasser umgesetzt werden.

Bei dieser Technologie müssen die Einspritzdüsen für die Harnstoff-Wasser-Lösung sowie die weiteren Systemkomponenten durch einen Filter vor Verschleiß geschützt werden. Dadurch erhöht sich die Lebensdauer der Dosiereinheit. Das Filterelement wird wahlweise auf der Druck- oder Saugseite der Pumpe angebracht, welche die Harnstoff-Lösung aus dem Vorratsbehälter fördert.

Der Gefrierpunkt der vorgenannten Harnstoff-Wasser-Lösung liegt - ohne fließverbessernde Additive - bei -11° C. Demnach kann nicht ausgeschlossen werden, dass die Lösung unter bestimmten klimatischen Umgebungsbedingungen insbesondere bei abgestelltem Fahrzeug einfriert. Da sich die Lösung beim Gefrieren ausdehnt, müssen Maßnahmen getroffen werden, damit die die Lösung führenden Systemkomponenten nicht durch die Ausdehnung geschädigt werden. Die gleiche Problematik tritt auch bei anderen einfriergefährdeten Fluiden und solche Fluide führenden Systemen auf.

Aus der EP 0 088 148 A2 ist ein Filter zum Aufarbeiten von Öl, mit einer zylindrischen, auswechselbaren Filterhülse und mit außen um die Filterhülse befestigtem Filtermaterial bekannt.

In die Filterhülse ist eine elastische Hülse einsteckbar, deren Außendurchmesser im entspannten Zustand nur wenig geringer ist als der Innendurchmesser der Filterhülse und deren Außenumfang durch den im Inneren der elastischen Hülse angelegten Druck der zu filternden Flüssigkeit erweiterbar ist.

Aus der EP 1 593 419 B1 ist ein Flüssigkeitsfilter für einfriergefährdete Fluide bekannt, dessen Filterkörper ringförmig geschlossen ist und einen Ringraum umschließt. Im Ringraum ist ein Stützelement angeordnet, welches geringfügig kleiner als der Ringraum ist, wodurch zwischen dem Filtermedium und dem Stützelement ein geringer Spalt vorhanden ist. Das Stützelement ist für das zu reinigende Fluid größtenteils undurchlässig, wodurch das durch das Stützelement eingenommene Volumen nicht durch das Fluid ausgefüllt werden kann. Die geringe Menge des Fluids kann sich nicht so stark ausdehnen, wodurch eine Beschädigung der Filterteile vermieden wird.

Gleichwohl weist die im Ringraum vorhandene Fluidmenge eine immer noch vorhandene, nicht vernachlässigbare Ausdehnung auf, die auf die Bauteile des Filters einwirkt und diese belastet.

Der Erfindung liegt die Aufgabe zugrunde, ein gattungsgemäßes Filterelement derart weiterzubilden, dass dessen Betriebssicherheit bei niedrigen Temperaturen verbessert ist.

Diese Aufgabe wird durch ein Filterelement mit den Merkmalen des Anspruchs 1 gelöst.

### Offenbarung der Erfindung

Es wird ein Filterelement zur Reinigung eines einfriergefährdeten Fluids vorgeschlagen, welches einen ringförmigen Filterkörper und einen vom Filterkörper umschlossenen Stützkörper umfasst, wobei der Stützkörper aus einem Elastomer, insbesondere aus EPDM (Ethylen-Propylen-DienKautschuk) gebildet ist. Die Steifigkeit des Elastomer-Stützkörpers reicht aus, um den Filterkörper gegen die radial von außen nach innen wirkende Durchströmungs-Druckdifferenz abzustützen. Andererseits führt die elastische Eigenschaft des Elastomers dazu, dass der Stützkörper unter Druckeinwirkung nachgeben kann. Die Nachgiebigkeit ist ausreichend, um die Volumenvergrößerung bei gefrierendem Fluid auszugleichen, wodurch eine Schädigung oder gar Zerstörung des Filterelements bzw. des Filterkörpers vermieden wird. Des Weiteren dient der Stützkörper als Verdrängerkörper, wodurch die auf der Reinseite des Filterkörpers vorhandene Fluidmenge verringert ist. Dies trägt zur Verringerung der Gesamtausdehnung und damit zur Verringerung der Beuteilbelastung bei.

In bevorzugter Weiterbildung ist der Stützkörper ein Hohlraum mit einem Innenraum, wobei der Innenraum nicht mit dem zu reinigenden Fluid in Verbindung steht. Der Hohlraum, der beispielsweise mit Gas und insbesondere mit Luft gefüllt und deshalb kompressibel bzw. nachgiebig ist, steigert die Nachgiebigkeit des Stützkörpers unter radial wirkender Druckbelastung. Hierdurch ist die Fähigkeit des Volumenausgleichs verbessert.

Erfindungsgemäß weist der Stützkörper auf seiner Außenseite Stützrippen mit zwischenliegenden Fluidkanälen auf, wobei sich der Filterkörper auf den Stützrippen abstützt. Dies ermöglicht es, dass der Stützkörper als großvolumiger Verdrängerkörper ausgebildet wird und dennoch das filtrierte Fluid auf der Reinseite des Filterkörpers mit geringem Durchströmungswiderstand ableiten kann.

Der Filterkörper ist als sternförmig gefalteter Balg ausgebildet, wobei die Stützrippen und die Fluidkanäle schraubenförmig angeordnet sind- Die achsparallel verlaufenden Falten bzw, deren Kanten liegen damit immer auf einer oder mehreren schraubenförmigen Stützrippen auf, ohne Gefahr zu laufen, in einen der Fluidkanäle hineingedrückt zu werden.

### Kurze Beschreibung der Zeichnungen

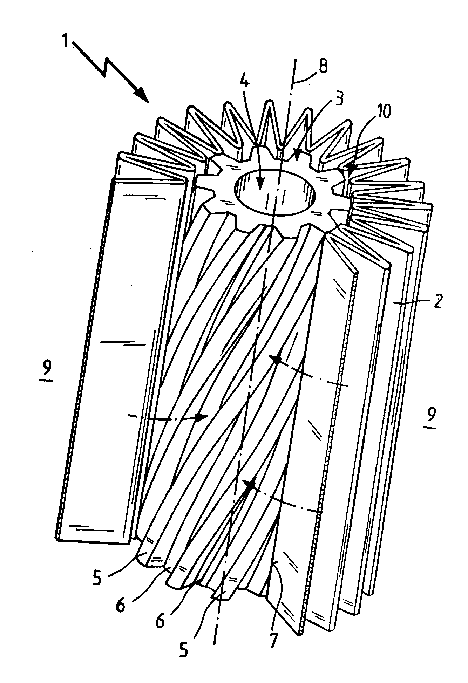

Ein Ausführungsbeispiel der Erfindung ist nachfolgend anhand der Zeichnung näher beschrieben.

### Ausführungsform(en) der Erfindung

Die einzige Figur zeigt in perspektivischer, teilweise geschnittener Darstellung ein erfindungsgemäß ausgeführtes Filterelement 1 zur Reinigung eines einfriergefährdeten Fluids, welches im gezeigten Ausführungsbeispiel für die Filtrierung einer Harnstoff-Wasser-Lösung für die Abgasnachbehandlung in einem Nutzkraftfahrzeug vorgesehen ist. Das Filterelement 1 ist aber auch für die Reinigung anderer einfriergefährdeter Fluide, insbesondere in Kraftfahrzeugen, geeignet.

Das Filterelement 1 ist im Wesentlichen rotationssymmetrisch zu einer Längsachse 8 ausgebildet und umfasst einen ringförmigen, etwa zylindrischen Filterkörper 2 sowie einen vom Filterkörper 2 umschlossenen, ebenfalls etwa zylindrischen Stützkörper 3. Der Filterkörper 2 und der Stützkörper 3 erstrecken sich koaxial zur Längsachse 8. Es können aber auch Ausführungen mit abweichender, beispielsweise nichtrotationssymmetrischer Kontur zweckmäßig sein.

Der Filterkörper 2 ist im gezeigten Ausführungsbeispiel als sternförmig gefalteter Balg ausgebildet, dessen Falten mit Innenkanten 7 achsparallel zur Längsachse 8 verlaufen.

Der radial innen liegende Stützkörper 3 weist auf seiner radial äußeren Außenseite Stützrippen 5 mit zwischenliegenden Fluidkanälen 6 auf. Die Stützrippen 5 und die Fluidkanäle 6 verlaufen schraubenförmig auf der Außenseite des Stützkörpers 3. Der Filterkörper 2 ist an seinen Innenkanten 7 radial von außen nach innen gegen die Außenflächen der Stützrippen 5 abgestützt.

Im Betrieb befindet sich die Rohseite 9 des Filterelementes 1 radial außerhalb des Filterkörpers 2, während radial innenseitig davon die Reinseite 10 liegt. Der Filterkörper 2 wird demnach vom zu reinigenden Fluid radial von außen nach innen durch strömt (siehe Pfeilangaben). Der dabei entstehende Durchströmungswiderstand erzeugt eine Druckdifferenz, die den Filterkörper 2 radial von außen nach innen gegen den Stützkörper 3 drückt. Der Stützkörper 3 verdrängt auf der Reinseite 10 des Filterkörpers 2 den größeren Teil, also mehr als 50 % des reinseitigen Fluidvolumens. Da er im Übrigen für das Fluid undurchlässig ist, fließt das filtrierte Fluid durch die Fluidkanäle 6 ab. Das reinseitige Fluidvolumen beschränkt sich im gezeigten Ausführungsbeispiel auf das Volumen zwischen den Innen-Falten des Filterkörpers 2 und auf das Volumen der Fluidkanäle 6. Hierdurch ist die Menge des reinseitig geführten Fluides minimiert, so dass dessen Ausdehnung beim Einfrieren nur geringe Lasten auf den Filterkörper 2 und den Stützkörper 3 ausübt.

Der Stützkörper 3 ist nach der Erfindung aus einem Elastomer gebildet. Für die Wahl des Elastomers hat sich EPDM (Ethylen-Propylen-DienKautschuk) als vorteilhaft herausgestellt. Außerdem ist der Stützkörper 3 als insbesondere geschlossener Hohlkörper mit einem Innenraum 4 ausgebildet. Der Innenraum 4 steht nicht mit dem zu reinigenden Fluid in Verbindung und ist auch nicht in anderer Weise mit einem inkompressiblen Medium gefüllt. Vielmehr enthält der Innenraum 4 ein Gas wie Luft oder dergleichen und ist dadurch kompressibel. Aus der Ausbildung des Stützkörpers 3 aus einem Elastomer, unterstützt durch den hohlen Innenraum 4 ergibt sich eine ausgeprägte radiale Nachgiebigkeit des Stützkörpers 3 gegen radial von außen nach innen wirkende Drucklasten. Bei einer durch Einfrieren bedingten Volumenvergrößerung des zwischen dem Stützkörper 3 und dem Filterkörper 2 geführten Fluids kann der Stützkörper 3 radial nach innen ausweichen und dadurch die Volumenvergrößerung kompensieren. Die elastische Nachgiebigkeit vermeidet eine Schädigung des Stützkörpers 3. Außerdem entlastet sie den Filterkörper 2, so dass auch dieser nicht durch die Volumenvergrößerung überlastet wird.

Der Stützkörper 3 kann spritzgegossen sein. Die gezeigte geometrische Ausgestaltung und auch vergleichbare andere geometrische Ausgestaltungen erlauben zudem eine Herstellung als endloses, auf Maß geschnittenes Extrusionsteil.

## Patentansprüche

1. Filterelement (1) zur Reinigung eines einfriergefährdeten Fluids, insbesondere einer Harnstoff-Wasser-Lösung, umfassend einen als sternförmig gefalteter Balg ausgebildeten, ringförmigen Filterkörper (2) und einen vom Filterkörper (2) umschlossenen Stützkörper (3), **dadurch gekennzeichnet, dass** der Stützkörper (3) aus einem Elastomer gebildet ist und auf seiner Außenseite Stützrippen (5) mit zwischenliegenden Fluidkanälen (6) aufweist, wobei sich der Filterkörper (2) auf den Stützrippen (5) abstützt und die Stützrippen (5) und die Fluidkanäle (6) schraubenförmig angeordnet sind.

2. Filterelement (1) nach Anspruch 1, **dadurch gekennzeichnet, dass** das Elastomer durch EPDM gebildet ist.

3. Filterelement (1) nach Anspruch 1 oder 2, **dadurch gekennzeichnet, dass** der Stützkörper (3) ein Hohlkörper mit einem Innenraum (4) ist, wobei der Innenraum (4) nicht mit dem zu reinigenden Fluid in Verbindung steht.

## Claims

1. Filter element (1) for cleaning a freeze-threatened fluid, in particular a ureawater solution, comprising an annular filter body (2) designed as star-shaped folded bellows and a support structure (3) enclosed by the filter body (2), **characterized in that** the support structure (3) is made of an elastomer and features on its exterior side supporting ribs (5) with intermediate fluid channels (6), the filter body (2) being supported by the supporting ribs (5) and the supporting ribs (5) and the fluid channels (6) being disposed in a screwshaped manner.

2. Filter element (1) according to claim 1, **characterized in that** the elastomer is formed by EPDM.

3. Filter element (1) according to claim 1 or 2, **characterized in that** the support structure (3) is a hollow body with an interior space (4), the interior space (4) not being in contact with the fluid to be cleaned.

## Revendications

1. Élément filtrant (1) destiné au nettoyage d'un fluide risquant de geler, notamment d'une solution urée/eau, comprenant un corps de filtre (2) annulaire exécuté en tant que soufflet plié en étoile et un élément d'appui (3) entouré du corps de filtre (2), **caractérisé en ce que** l'élément d'appui (3) est fait d'un élastomère et présente, sur sa face extérieure, des nervures d'appui (5) dotées de canaux de fluide (6) intermédiaires, le corps de filtre (2) s'appuyant sur les nervures d'appui (5) et les nervures d'appui (5) et les canaux de fluide (6) étant disposés en forme de vis.

2. Élément filtrant (1) selon la revendication 1, **caractérisé en ce que** l'élastomère est fait d'EPDM.

3. Élément filtrant (1) selon la revendication 1 ou 2, **caractérisé en ce que** l'élément d'appui (3) est un corps creux avec un espace intérieur (4), l'espace intérieur (4) n'étant pas relié au fluide à nettoyer.
